# EUROPEAN PATENT SPECIFICATION

(11) **EP 2 906 638 B1**
(45) Date of publication and mention of the grant of the patent: **27.05.2020**
(21) Application number: 13777323.0
(22) Date of filing: 10.10.2013
(51) Int. Cl.: C09C 1/40, C01B 33/20, C01B 33/22, C01B 33/26, C09C 1/42, C09C 3/04, C04B 33/02, C01B 33/42, C09C 1/30, C01B 33/40, C09C 1/02, C09C 1/28, C09D 7/61, C09D 7/40

(54) **PARTICULATE PHYLLOSILICATE MATERIAL**
PARTIKULÄRES PHYLLOSILIKAT MATERIAL
PARTICULES DE PHYLLOSILCATES

(30) Priority: 10.10.2012 GB 201218125
(43) Date of publication of application: 19.08.2015
(73) Proprietor: IMERTECH SAS, 75015 Paris (FR)
(72) Inventor: HIORNS, Anthony, St. Austell Cornwall PL25 5DE (GB)
(74) Representative: Haseltine Lake Kempner LLP
(86) International application number: PCT/GB2013/052643
(87) International publication number: WO 2014/057273

(56) References cited:
- WO-A1-00/59841
- WO-A1-02/16511
- WO-A1-2004/061014
- WO-A2-2004/016697
- US-A- 4 391 733
- US-B1- 6 348 536
- FRANK M ETZLER ET AL: "Particle Size Analysis: A Comparison of Various Methods II", PART. PART. SYST. CHAR, WILEY-VCH VERLAG GMBH, vol. 14, 1 January 1997 (1997-01-01), pages 278-282, XP007919197, [retrieved on 1997-01-01]
- M. LI, D. WILKINSON, K. PATCHIGOLLA: "Comparison of Particle Size Distributions MeasuredUsing Different Techniques", PARTICULATE SCIENCE AND TECHNOLOGY, vol. 23, 24 February 2007 (2007-02-24), pages 265-284, DOI: 10.1080/02726350590955912

## Description

### Field of the Invention

The present invention relates to ground phyllosilicate and use thereof.

### Background of the Invention

Aqueous suspensions containing platy minerals or pigments, such as the phyllosilicate minerals kaolin and talc, are used widely in a number of applications. These include, for example, the production of pigment or filler containing compositions which may be used in paper manufacture or paper coating, and the production of compositions for paints, plastics and the like.

The natural sources of platy minerals typically comprise stacks of particles, where the individual particles are weakly bound to each other. These stacks are created by chemical processes during the process when the pigments are created (e.g. kaolin is produced by the weathering of clays or feldspar in hot, moist conditions). In preparing products for industrial use, these natural materials are processed, typically by grinding an aqueous suspension of the material in the presence of a hard grinding media (e.g. ceramic spheres or sand).

The present practice is to process the raw material by suspending the product in water at relatively low solids (typically <40% dry content). This makes it easier to remove contaminants, apply chemical treatments (e.g. bleaching to improve colour) and to refine the product to a target particle size. The low solids content is also needed because a combination of an increasing particle shape factor (also referred to as "aspect ratio") and either no dispersant or very low levels of dispersant means that the viscosity would be too high for normal processing operations (e.g. pumping, mixing, etc.). The finer product is then dewatered and dried, so that it can be sold either as a dry powder (<3% moisture), a granulate (10-20% moisture) or a dispersed slurry (25-40% moisture).

WO 00/59841 A1 teaches kaolin raw materials to produce novel kaolin caly pigments especially useful for coating lightweight and ultra-lightweight paper for rotogravure and offset printing, thereby using a kaolin crude having a desired amount of non-kaolin phyllosilicate clay minerals to produce mechanically delaminated kaolin coating pigments.

WO2004/061014 A1 teaches a kaolin composition having improved physical properties for use in the production of paper products. The composition can comprise kaoling having a shape factor of at least 20 and a particle size distribution such that at least 94% by weight of the kaolin have an esd of less than 2 µm. Also to a method for making the kaolin product from sedimentary kaolin is disclosed.

WO 02/16511 A1 relates to a method of producing a kaolin particulate material that is suitable for use as improved SC filler. The method includes furthermore different steps of preparing from an aqueous feed suspension a kaolin fraction in which not more than 10% having a particle size of 10 µm or greater and not more than 10% have a particle size of less than 0.25 µm.

WO 2004/016697 A2 teaches a kaolin pigment product derivable from crude kaolin obtained from a secondary kaolin deposit for use in coating compositions to provide a gloss coating on paper. The pigment product comprises a processed particulate kaolin having a particle size distribution such that at least about 85% by weight of the particles have an equivalent spherical diameter of 2 µm or less.

US6348536B1 discloses a process for treating a lamella-type mineral in the form of particles constituted of stacks of sheets to obtain a functional filler for a polymer material. It is further disclosed that the mineral is suspended in a liquid and subjected to a delamination procedure after which a smaller particle size is obtained than the initial particle size was. The remaining talc powder can be incorporated as filler in thermoplastics enhancing physical properties.

Two processes occur during grinding. The individual particles can be separated from the stack due to delamination, thus leading to an increase in the shape factor. The particles can also break or snap leading to a reduction in the shape factor. At lower solids, delamination dominates, so there is a significant increase in the shape factor.

Further, when processing at a low solids content, water must then be removed to obtain the final product form (e.g. high solids slurry, granulate or spray dried). Further centrifuging of the product may also be necessary to remove coarse particles. This further processing adds to the amount of equipment and machinery required (increasing capital expenditure) and decreases throughput of the particulate inorganic material.

### Summary of the Invention

The invention relates to a ground phyllosilicate mineral comprising talc having a d₅₀ in the range of from 0.5 to 10 µm and a shape factor of from 10 to 100.

In a first aspect, there is provided a method for grinding a particulate inorganic material, comprising:
(i) providing an aqueous suspension comprising a particulate phyllosilicate mineral having a shape factor less than 60; and
(ii) grinding the aqueous suspension to form a ground product,
wherein the particulate phyllosilicate mineral is present in the aqueous suspension in an amount greater than 55% by weight.

In a second aspect, there is provided a method for grinding a particulate inorganic material, comprising:
(i) providing an aqueous suspension comprising a particulate phyllosilicate mineral having a shape factor less than 60; and
(ii) grinding the aqueous suspension using a tumbling mill, a stirred mill, a stirred media detritor or a tower mill to form a ground product,
wherein the particulate phyllosilicate mineral is present in the aqueous suspension in an amount greater than 45% by weight.

In the said first and second aspects, the shape factor of the phyllosilicate mineral in the product may be lower than the shape factor of the phyllosilicate mineral in the aqueous suspension before grinding, or may be approximately the same as the shape factor of the phyllosilicate mineral in the aqueous suspension before grinding, or may be higher than the shape factor of the phyllosilicate mineral in the aqueous suspension before grinding.

Further, the disclosure relates to a ground phyllosilicate mineral comprising particulate kaolin having a d₅₀ in the range of from 0.1 to 5 µm and a shape factor of from 10 to 100.

The present inventors have found that by grinding, at relatively high solids content, a phyllosilicate inorganic material which has been selected to have a relatively low shape factor, can lead to significant benefits. In particular, grinding a dispersed suspension of the phyllosilicate at a high solids content means that no dewatering or drying is required.

Furthermore, improvements in the steepness of the product formed, and its brightness may be obtained. Also, when solo grinding talc (i.e. 100% talc) or co-grinding a talc/kaolin blend at high solids, it is possible to dispense with the need for a surfactant, or wetting agent, which is typically used when producing a high solids talc slurry. Further, a co-ground talc/kaolin slurry is more stable (i.e. less likely to settle or gel) and has a better solids/viscosity performance compared to a talc slurry.

It has also been found that the levels of coarse particles in the high solids ground product is sufficiently low that the product may be directly used in paper coating, without a centrifugation step. Typically, a centrifugation step may be required to remove coarse particles from ground products which have been prepared by grinding phyllosilicate minerals, in order not to give rise to adverse runnability effects in the high speed paper coating process. In certain embodiments of the invention, such a centrifugation step may be eliminated.

Moreover, phyllosilicate inorganic materials, such as talc, may be produced by certain embodiments of the methods of the present disclosure to have a fine (e.g., reduced) particle size and medium shape factors (e.g., shape factors lower than talc wet ground by previous methods, yet higher than dry ground talc).

### Detailed Description

The present invention provides aspects mentioned above. Optional and preferred features and embodiments of the various aspects are also described. Unless otherwise stated, any optional or preferred feature or embodiment may be combined with any other optional or preferred feature or embodiment, and with either of the aspects of the invention mentioned herein.

Particle size characteristics described herein are measured via sedimentation of the particulate material in a fully dispersed condition in an aqueous medium using a Sedigraph 5100 particle size analyzer supplied by Micrometrics Instruments Corporation Norcross, Ga, USA. The Sedigraph 5100 provides measurements and a plot of the cumulative percentage by weight of particles having a size referred to in the art as the "equivalent spherical diameter" (esd).

"Shape factor", as used herein, is a measure of the ratio of particle diameter to particle thickness for a population of particles of varying size and shape as measured using the electrical conductivity methods, apparatuses, and equations described in U.S. Patent No. 5576617. As the technique for determining shape factor is further described in the '617 patent, the electrical conductivity of a composition of an aqueous suspension of orientated particles under test is measured as the composition flows through a vessel. Measurements of the electrical conductivity are taken along one direction of the vessel and along another direction of the vessel transverse to the first direction. Using the difference between the two conductivity measurements, the shape factor of the particulate material under test is determined.

The term "d₅₀" used herein refers to the median particle diameter and is the particle diameter at which 50% by weight of the product is larger and 50% by weight is smaller.

The "steepness" of a particle size distribution, as referred to herein is calculated by 100 x d₃₀ /d₇₀ (d₃₀ is the size at which 30% by weight of the product is larger and 70% is smaller, d₇₀ is the size at which 70% by weight is larger and 30% is smaller).

The term "solids" used herein refers to the pigment in a pigment-water slurry, unless otherwise defined by context.

### Phyllosilicate Mineral Feed Material

The phyllosilicate mineral used in certain embodiments may be selected from kaolin, talc and mica. In one embodiment, a single phyllosilicate mineral is used in order to produce a ground material which comprises solely that phyllosilicate mineral. For example the single phyllosilicate mineral may be kaolin or the single phyllosilicate mineral may be talc. In another embodiment, a mixture of two or more phyllosilicate minerals may be ground together, or co-ground. For example, a mixture of kaolin and talc may be co-ground using the method of certain embodiments disclosed herein. Where a mixture of kaolin and talc is used, the weight ratio of kaolin to talc is in the range of 95:5 to 5:95, for example in the range of from preferably between 50:50 10 to 90:10.

The shape factor of the "feed" phyllosilicate mineral in the aqueous suspension is less than 60, for example less than 50 or less than 40, or less than 30, or less than 20, or less than 15. The shape factor of the feed phyllosilicate mineral may be less than 60 and greater than 5, or may be greater than 10, or may be greater than 15. In one embodiment, the feed mineral is talc having a shape factor of from 10 to 45, or from 15 to 35. In another embodiment, the feed mineral is a kaolin having a shape factor of from 10 to 50.

Where kaolin is present in the feed, it may have a d₅₀ in the range of from 0.1 to 20 µm, for example in the range of from 0.1 to 10 µm, for example in the range of from 0.1 to 5 µm. The steepness value of kaolin used as the feed mineral may be in the range of from 10 to 50.

In an embodiment, the feed material is kaolin having a shape factor of from 10 to 50 and a d₅₀ in the range of from 0.1 to 5 µm.

Where talc is present in the feed, it may have a d₅₀ in the range of from 2 to 20 µm, for example in the range of from 2 to 15 µm, for example in the range of from 2 to 10 µm.

The steepness value of talc used as the feed mineral may be in the range of from 15 to 40, for example from 25 to 35.

The talc may have a whiteness of at least about 50, or at least about 60 or at least about 70, as measured using a MinoltaChroma meter CR300 using illuminant D65 and a measurement geometry of 2°.

The talc may have a particle size distribution such that no more than 50% by weight of the particles are smaller than 2 µm. In an embodiment the talc may have a particle size distribution such that no more than 40% by weight of the particles are smaller than 2 µm. In another embodiment, the talc may have a particle size distribution such that no more 5 than 35% by weight of the particles are smaller than 2 µm. In another embodiment, the talc may have a particle size distribution such that no more than 30% by weight of the particles are smaller than 2 µm. In yet another embodiment, the talc may have a particle size distribution such that no more than 25% by weight of the particles are smaller than 2 µm. In one embodiment, the talc may have a particle size distribution such that no more 10 than 20% by weight of the particles are smaller than 2 µm. In certain embodiments, the talc may have a particle size distribution such that no more than 15% by weight of the particles are smaller than 2 µm.

In an embodiment, the feed material is talc having a shape factor of from 15 to 35 and a 15 d₅₀ in the range of from 2 to 20 µm, for example in the range of from 2 to 10 µm.

In the first aspect, the particulate phyllosilicate feed mineral is present in the aqueous suspension in an amount greater than 55% by weight, for example greater than 60% by weight, or greater than 65% by weight embodiments, the phyllosilicate feed mineral is present in an amount no more than 70 wt%. In one embodiment, the particulate phyllosilicate feed mineral is present in the aqueous suspension in an amount of from 55 to 65 wt%.

In the second aspect, the particulate phyllosilicate feed mineral is present in the aqueous suspension in an amount greater than 45% by weight, for example greater than 50% by weight, or greater than 55% by weight, or greater than 60% by weight, or greater than 65% by weight. In certain embodiments, the phyllosilicate feed mineral is present in an amount no more that 70 wt%. In one embodiment, the particulate phyllosilicate feed mineral is present in the aqueous suspension in an amount of from 55 to 65 wt%.

In addition to the phyllosilicate mineral present in the aqueous suspension for grinding, one or more further particulate minerals may be present. In an embodiment of the invention, the only particulate mineral present in the aqueous suspension is the phyllosilicate mineral. Thus, in such embodiments no additional particulate mineral is present.

The phyllosilicate mineral for use as feed material may be a prepared from the raw natural material by one or more pre-processing steps. For example, the raw material may be processed in aqueous suspension to remove contaminants and impurities, for example by magnetic separation. The raw material may also be bleached using methods known to those skilled in the art. The raw material may also be subjected to a preliminary process to reduce the particle size of the agglomerated raw material. For example, the raw material may be ground or milled to reduce the particle size to the desired feed material particle size. In certain embodiments where the phyllosilciate mineral is talc, the feed material may be subjected to an initial dry grinding step. In certain embodiments where the phyllosilciate mineral is kaolin, the feed material may be subjected to an initial wet grinding step.

The suspension comprising the coarse, pre-processed material may then be dewatered by, for example, use of a tube press, although other methods of dewatering are also contemplated, such as thermal or spray drying. In certain embodiments, the dewatered product may have a suitable high solids content corresponding to that desired for the grinding stage.

In alternate embodiments, the dewatered product may be dispersed using a suitable dispersing agent.

Suitable dispersing agents are chemical additives capable, when present in a sufficient amount, of acting on the particles of the particulate material to prevent or effectively restrict flocculation or agglomeration of the particles to a desired extent, according to normal processing requirements. The dispersant may be present in levels up to about 1% by weight, and includes, for example, polyelectrolytes such as polyacrylates and copolymers containing polyacrylate species, especially polyacrylate salts (e.g., sodium and aluminium optionally with a group II metal salt), sodium hexametaphosphates, non-ionic polyol, polyphosphoric acid, condensed sodium phosphate, non-ionic surfactants, alkanolamine and other reagents commonly used for this function. The dispersant may, for example, be selected from conventional dispersant materials commonly used in the processing and grinding of inorganic particulate materials. Such dispersants will be well recognised by those skilled in this art. They are generally water-soluble salts capable of supplying anionic species which in their effective amounts can adsorb on the surface of the inorganic particles and thereby inhibit aggregation of the particles. The unsolvated salts suitably include alkali metal cations such as sodium. Solvation may in some cases be assisted by making the aqueous suspension slightly alkaline. Examples of suitable dispersants include: water soluble condensed phosphates, e.g., polymetaphosphate salts [general form of the sodium salts: (NaP03)x] such as tetrasodium metaphosphate or so-called "sodium hexametaphosphate" (Graham's salt); water-soluble salts of polysilicic acids; polyelectrolytes; salts of homopolymers or copolymers of acrylic acid or methacrylic acid, or salts of polymers of other derivatives of acrylic acid, suitably having a weight average molecular mass of less than about 20,000. Sodium hexametaphosphate and sodium polyacrylate, the latter suitably having a weight average molecular mass in the range of about 1,500 to about 10,000, are especially preferred.

In certain embodiments of the invention, talc is solo-ground or is co-ground with kaolin, in the absence of any surfactant species. This reduces and simplifies the dispersant system needed when grinding. Normally, in order to make a high solids talc slurry, in addition to the presence of a dispersant, a surfactant is included and the pH is maintained relatively high. It was found, however, that when making the blend before grinding, the talc can be added to a kaolin slurry without the need for any surfactant, although it may be necessary to include an additional quantity of dispersant, typically the same one that is used for kaolin make-down.

In certain embodiments of the method disclosed herein, it has been found that addition of a thickening agent to the suspension is not necessary embodiments of the invention, grinding is carried out in the absence of any thickening agent, Therefore in certain embodiments of the invention, grinding is carried out in the absence of any thickening agent,

### Grinding of the Aqueous Suspension

The aqueous suspension of phyllosilicate feed material is subjected to grinding. Grinding is desirably carried out by attrition using a particulate grinding medium. Alternatively, the suspension may be ground by autogenous grinding, i.e. in the absence of a grinding medium. Where used, the particulate grinding medium, when present, may be of a natural or a synthetic material. The grinding medium may, for example, comprise balls, beads or pellets of any hard mineral, ceramic or metallic material; such materials may include, for example, alumina, zirconia, zirconium, silicate, aluminium silicate or the mullite-rich material which is produced by calcining kaolinitic clay at a temperature in the range of from about 1300°C to about 1800°C. Alternatively, particles of natural sand of a suitable particle size may be used.

The grinding may be carried out in one or more stages. For example, the feed suspension may be partially ground in a first attrition grinder, the suspension of partially ground inorganic particulate material then being fed to a second attrition grinder for further grinding, after which the suspension of ground material may be fed to one or more subsequent attrition grinders.

Further doses of dispersing agent may be added during grinding as required to maintain a fluid suspension.

The grinding energy imparted during grinding may be at least 25 kWh/t, for example at least 50 kWh/t, at least 100 kWh/t, at least 150 kWh/t, at least 200 kWh/t, at least 250 kWh/t, at least 300 kWh/t, or at least 500 kWh/t.

After completion of grinding, any grinding medium may be removed, and the product suspension may be dewatered, if required. In some embodiments of the invention, the solids content of the suspension after completion of grinding is targeted to be the final desired product solids content, in which case no further dewatering is required, and in particular a thermal drying step may be dispensed with. For example, in an embodiment in which the phyllosilicate mineral comprises kaolin, the kaolin feed material may be prepared by a method in which dewatering is accomplished by tube pressing only and the high solids grinding step is performed to produce the slurry at the required final target solids. In another embodiment in which the phyllosilicate mineral in the suspension to be ground is 100% kaolin, the kaolin feed material may be prepared by a method in which dewatering is accomplished by tube pressing only and the high solids grinding step is performed to produce the slurry at the required final target solids. Thereby, expensive thermal drying is avoided.

Grinding may be carried out in a suitable grinding device. In certain embodiments, the grinding device may be an open grinder having a vertical axis, without recirculation of the suspension. By way of example, the grinding device may be a tumbling mill (e.g., rod, ball and autogenous), a stirred mill (e.g., SAM, GK grinder, or IsaMill), a screened grinder such as a stirred media detritor (SMD), or a tower mill. In certain embodiments, the use of a stirred mill detritor is preferred. Further information about stirred mills may be found in the textbook "Wills' Mineral Processing Technology", 7th Edition, Chapter 7, the contents of which are herein incorporated by reference for all purposes.

### Ground Phyllosilicate Mineral Product

In an embodiment, the ground product obtained by grinding the aqueous suspension of phyllosilicate mineral has a shape factor which is approximately the same as or is reduced as compared to the feed material. This may be the case where the particles of the feed mineral are relatively thin and have a high aspect ratio, for example where the feed has already been fully delaminated (so no further increase in shape factor is possible). The maximum shape factor may be between 10 and 45, for example between 12 and 40.

In another embodiment, the ground product obtained by grinding the aqueous suspension of phyllosilicate mineral has an increased shape factor compared to the feed material. The shape factor may be increased by at least 50% or at least 100%, and may depend on, for example, the origin of the mineral. Thus, some deposits may have a greater proportion of particle stacks than others, and therefore may give a larger increase in shape factor. In embodiments, the increased shape factor will be less than 100, or less than 80 or less than 60 or less than 50. Where the ground product is a mixture of phyllosilicate minerals, the shape factor of each phyllosilicate mineral in the mixture is increased, and the increased shape factor (or other property) is measured on the mixture of the minerals compared to the shape factor of the mixture of phyllosilicate minerals in the feed.

Where the phyllosilicate mineral comprises kaolin, the shape factor of the kaolin in the product is greater than the shape factor of the kaolin in the feed material, and is in the range of 10 to 100, for example in the range of 10 to 50.

Where the phyllosilicate mineral comprises talc, the shape factor of the talc in the product is greater than the shape factor of the talc in the feed material, and is in the range of 10 to 100, for example in the range of 20 to 70, or in the range of 30 to 60, or in the range of 40 to 50.

Where the phyllosilicate mineral comprises kaolin, the d₅₀ of the kaolin in the product is, for example in the range of from 0.1 to 10 µm, for example in the range of from 0.1 to 5 µm, for example in the range of from 0.1 to 3 µm.

Where the phyllosilicate mineral comprises talc, the d₅₀ of the talc in the product is, for example in the range of from 0.1 to 20 µm, for example in the range of from 0.5 to 10 µm, for example in the range of from 0.5 to 6 µm or in the range of 1.0 to 5 µm, or in the range of 1.5 to 4 µm.

The solids content of the aqueous suspension resulting after grinding will be determined by the solids content of the aqueous suspension of feed material. Because of evaporation of water during grinding, the solids content of the aqueous suspension resulting after grinding may be higher than that of the feed material, unless additional water is added during grinding to maintain a desired solids content.

The ground phyllosilicate mineral obtained by the methods disclosed herein are another aspect. Thus, certain embodiments also provide a particulate kaolin, optionally in aqueous suspension, having a d₅₀ in the range of from 0.1 to 5 µm and a shape factor of from 10 to 100, for example a d₅₀ is in the range of from 0.4 to 2.5 µm and a shape factor is in the range of from 10 to 50. In certain embodiments, the invention provides a particulate talc, optionally in aqueous suspension, having a d₅₀ in the range of from 0.5 to 10 µm and a shape factor of from 10 to 100, for example a d₅₀ in the range of from 1.0 to 6.0 µm and the shape factor is in the range of from 20 to 70.

### Examples of embodiments of the invention

In an embodiment, the phyllosilicate feed mineral is kaolin having a shape factor of from 10-20 and a d₅₀ of 2 µm or higher, for example a shape factor of 15 to 20 and a d₅₀ of 2 to 5 µm. Grinding is performed at 55 wt% solids or higher. The product mineral has a shape factor of greater than 25, or greater than 30, or greater than 40 or greater than 50, and has a d₅₀ of 1.5 µm or smaller.

In another embodiment, the phyllosilicate feed mineral is kaolin having a shape factor of from 5-15 and a d₅₀ of 0.5 µm or higher, for example a shape factor of 10 to 15 and a d₅₀ of 0.5 to 2µm. Grinding is performed at 55 wt% solids or higher. The product mineral has a shape factor which is approximately the same as the shape factor of the feed mineral, or has a shape factor which is greater than the shape factor of the feed mineral, for example greater than 15, or greater than 20, or greater than 25 or greater than 30. Further, the product mineral has a d₅₀ smaller than 0.5 µm.

In another embodiment, the phyllosilicate feed mineral is talc having a shape factor of from 10-30 and a d5o of 5 µm or higher, for example a shape factor of 15 to 25 and a d5o of 5 to 10 µm. Grinding is performed at 55 wt% solids or higher. The product mineral has a shape factor greater than 40, or greater than 50, or greater than 60. Further, the product mineral has a d₅₀ smaller than 5 µm.

In another embodiment, the phyllosilicate feed mineral is talc having a shape factor of from 30-50 and a d5o of 2 µm or higher, for example a shape factor of 35 to 45 and a d5o of 2.5 to 5 µm. Grinding is performed at 55 wt% solids or higher. The product mineral has an increased shape factor greater than 40, or greater than 45, or greater than 50. Further, the product mineral has a reduced d₅₀ smaller than 2.5 µm.

In another embodiment, the phyllosilicate feed mineral is a blend of kaolin and talc in a weight ratio of 1:1 to 5:1, in which the talc has a shape factor of from 10-30 and a d₅₀ of 5µm or higher, and the kaolin has a shape factor of from 10-30 and a d₅₀ of 2 µm or higher. Grinding is performed at 55 wt% solids or higher. The product mineral has an increased shape factor greater than 30, or greater than 40. Further, the mixed product mineral has a reduced d₅₀ smaller than 2.5 µm.

### Uses of the Ground Particulate Material

The ground particulate material obtained using certain embodiments of the methods disclosed herein may be used in a wide variety of applications, as will be readily apparent to one of ordinary skill in this art. In certain embodiments, the inorganic particulate material is present as a coating pigment or filler, or as part of a coating or filler composition. The applications include, for example, the preparation of: paper(which term includes within its scope all forms of paper, card, board, cardboard and the like, including without limitation printing paper and writing paper); polymers and rubbers, e.g. plastics (which may be in the form of a. film); paints; sealants and mastics; ceramics; as well as compositions which are subsequently processed to obtain any of the above.

Particular embodiments of the present invention will now be described with reference to the following non-limiting Examples and the accompanying drawings.

### Examples

### Example 1

A feed kaolin having a d₅₀ of 2.1 µm, a content of particles having an esd of 2 µm or smaller of 48% by weight, a steepness of 31 and a shape factor of 17 was prepared into fully dispersed aqueous suspensions having solids content of 30% and 60% by weight. The dispersant was a sodium polyacrylate dispersant.

The suspensions were attrition ground using a medium size high density grinding media (8/14), with varying amounts of energy input. The results obtained are set forth in Table 1 below.

**Table 1**

| | 2µm Content (%) | | d₅₀ (µm) | | Steepness | | Shape Factor | |
|---|---|---|---|---|---|---|---|---|
| Grinding Solids (%) | 30 | 60 | 30 | 60 | 30 | 60 | 30 | 60 |
| Grinding Energy (kWh/t) | | | | | | | | |
| 0 | 48 | 48 | 2.10 | 2.10 | 31 | 31 | 17 | 17 |
| 25 | 66 | 56 | 1.33 | 1.71 | 32 | 31 | 41 | 31 |
| 50 | 72 | 61 | 1.08 | 1.51 | 31 | 30 | 50 | 40 |
| 75 | 77 | 64 | 0.91 | 1.38 | 31 | 30 | 57 | 46 |
| 100 | 80 | 66 | 0.83 | 1.30 | 32 | 29 | 60 | 52 |

### Example 2

The method of Example 1 was used to grind a different kaolin feed. The kaolin used had a d₅₀ of 0.86 µm, a content of particles having an esd of 2 µm or smaller of 70% by weight, a steepness of 21 and a shape factor of 11. The results obtained are set forth in Table 2 below.

### Example 3

The method of Example 1 was used to grind a different kaolin feed. The kaolin used had a d₅₀ of 0.56 µm, a content of particles having an esd of 2 µm or smaller of 90% by weight, a steepness of 36 and a shape factor of 12. The results obtained are set forth in Table 3 below.

**Table 2**

| | 2µm Content (%) | | d50 (µm) | | Steepness | | Shape Factor | |
|---|---|---|---|---|---|---|---|---|
| Grinding Solids (%) | 30 | 60 | 30 | 60 | 30 | 60 | 30 | 60 |
| Grinding Energy (kWh/t) | | | | | | | | |
| 0 | 70 | 70 | 0.86 | 0.86 | 21 | 21 | 11 | 11 |
| 25 | 84 | 81 | 0.78 | 0.63 | 37 | 27 | 14 | 21 |
| 50 | 88 | 85 | 0.71 | 0.55 | 40 | 28 | 13 | 26 |
| 75 | 90 | 88 | 0.65 | 0.52 | 41 | 29 | 13 | 28 |
| 100 | 92 | 90 | 0.63 | 0.49 | 41 | 31 | 19 | 34 |
| 150 | 93 | 90 | 0.56 | 0.48 | 40 | 30 | 29 | 39 |
| 200 | 95 | 92 | 0.51 | 0.45 | 39 | 30 | 27 | 32 |

**Table 3**

| | 2µm Content (%) | | d50 (µm) | | Steepness | | Shape Factor | |
|---|---|---|---|---|---|---|---|---|
| Grinding Solids (%) | 30 | 60 | 30 | 60 | 30 | 60 | 30 | 60 |
| Grinding Energy (kWh/t) | | | | | | | | |
| 0 | 90 | 90 | 0.56 | 0.56 | 36 | 36 | 12 | 12 |
| 25 | 93 | 91 | 0.56 | 0.56 | 42 | 38 | 13 | 12 |
| 50 | 94 | 93 | 0.54 | 0.54 | 44 | 40 | 14 | 14 |
| 75 | 95 | 94 | 0.54 | 0.54 | 43 | 38 | 14 | 13 |
| 100 | 96 | 95 | 0.52 | 0.53 | 44 | 38 | 14 | 14 |

### Example 4

A feed talc having a d₅₀ of 8.4 µm, a content of particles having an esd of 2 µm or smaller of 13% by weight, a steepness of 31 and a shape factor of 21 was prepared into fully dispersed aqueous suspension having a solids content of 60% by weight. The same dispersant that was used to prepare the kaolin suspensions was employed.

The suspension was attrition ground using a medium size high density grinding media (8/14), with varying amounts of energy input. The results obtained are set forth in Table 4 below.

For comparison, results for a dry processed talc and a commercially available wet ground talc were also included.

**Table 4**

| | Coarse Talc | | | Dry Processed Talc | Wet Ground Talc |
|---|---|---|---|---|---|
| Grinding energy (kWh/t) | 0 | 125 | 250 | x | x |
| 2µm content (%) | 13 | 25 | 35 | 35 | 48 |
| d50 (µm) | 8.4 | 5.9 | 2.8 | 3.0 | 2.1 |
| Steepness | 31 | 39 | 41 | 36 | 37 |
| Shape Factor | 21 | 64 | 71 | 34 | 101 |

### Example 5

Example 4 was repeated using a different talc, having a shape factor of 20, a d50 of 7.55µm and a content of particles having an esd of 2 µm or smaller of 13% by weight. The results obtained are set forth in Table 5 below. Solids content was 60 wt%.

**Table 5**

| | Coarse Talc | | |
|---|---|---|---|
| Grinding energy (kWh/t) | 0 | 125 | 250 |
| 2µm content (%) | 13 | 26 | 35 |
| d50 (µm) | 7.55 | 3.68 | 2.80 |
| Shape Factor | 20 | 63 | 70 |

### Example 6

Example 4 was repeated using a different talc, having a shape factor of 39, a d50 of 2.96µm and a content of particles having an esd of 2 µm or smaller of 35% by weight. The results obtained are set forth in Table 6 below. Solids content was 57 wt%.

**Table 6**

| | Coarse Talc | | |
|---|---|---|---|
| Grinding energy (kWh/t) | 0 | 125 | 250 |
| 2µm content (%) | 35 | 39 | 48 |
| d50 (µm) | 2.96 | 2.30 | 2.05 |
| Shape Factor | 39 | 52 | 55 |

### Example 7

Example 4 was repeated using a mixture of 75wt% kaolin and 25 wt% talc. Total solids content in the aqueous suspension for grinding was 64 wt%.

The characteristics of the feed kaolin and feed talc are set forth in Table 7 below, along with the results obtained.

**Table 7**

| | Talc | | | Kaolin | | | Kaolin/Talc Blend | | | Kaolin/Talc Co-ground | | |
|---|---|---|---|---|---|---|---|---|---|---|---|---|
| Grinding energy (kWh/t) | 0 | 125 | 250 | 0 | 125 | 250 | 0 | 125 | 250 | 0 | 125 | 250 |
| Grinding solids (%) | 60 | 60 | 60 | 69 | 69 | 69 | x | x | x | 64 | 64 | 64 |
| 2µm content (%) | 13 | 25 | 35 | 45 | 63 | 70 | 34 | 54 | 61 | 40 | 51 | 56 |
| d50 (µm) | 8.4 | 5.9 | 2.8 | 2.3 | 1.3 | 1.0 | 3.0 | 1.8 | 1.4 | 2.8 | 1.9 | 1.6 |
| Steepness | 31 | 39 | 41 | 35 | 27 | 26 | 36 | 27 | 26 | 27 | 25 | 23 |
| Shape Factor | 21 | 64 | 71 | 25 | 39 | 38 | 24 | 45 | 46 | 22 | 43 | 45 |

## Claims

1. A ground phyllosilicate mineral comprising particulate talc having a d₅₀ in the range of from 0.5 to 10 µm and a shape factor of from 10 to 100, wherein the shape factor is the measure of the ratio of particle diameter to particle thickness for a population of varying size and shape as measured using the electrical conductivity methods, apparatuses, and equations described in U.S. Patent No. 5,576,617.

2. A ground phyllosilicate mineral according to claim 1, wherein the shape factor is in the range of from 20 to 70.

3. A ground phyllosilicate mineral according to claim 1, wherein the shape factor is in the range of from 30 to 60.

4. A ground phyllosilicate mineral according to claim 1, wherein the d₅₀ is in the range of from 0.5 to 6 µm.

5. A ground phyllosilicate mineral according to claim 1, wherein the d₅₀ is in the range of from 1.0 to 5 µm.

6. A ground phyllosilicate mineral according to claim 1, wherein the d₅₀ is in the range of from 1.5 to 4 µm.

7. A ground phyllosilicate mineral according to claim 1, wherein the d₅₀ is in the range of from 1.0 to 6.0 µm and the shape factor is in the range of from 20 to 70.

8. Use of the ground phyllosilicate mineral according to any one of claims 1 to 7 as a coating pigment or as a filler, or as part of a coating or a filler composition in the preparation of paper, card, board, cardboard, writing paper, printing paper, polymers, rubbers, plastics, plastic films, paints, sealants, mastics, or ceramics.

9. Composition comprising the ground phyllosilicate mineral according to any one of claims 1 to 7 for use in obtaining paper, card, board, cardboard, writing paper, printing paper, polymers, rubbers, plastics, plastic films, paints, sealants, mastics, or ceramics.

10. Paper comprising the ground phyllosilicate mineral according to any one of claims 1 to 7, wherein the paper is any paper, card, board, or cardboard, such as for example printing paper or writing paper.

11. Polymer or rubber comprising the ground phyllosilicate mineral according to any one of claims 1 to 7, wherein the polymer or rubber may be a plastic, such as a plastic film.

12. Paint comprising the ground phyllosilicate mineral according to any one of claims 1 to 7.

13. Sealant comprising the ground phyllosilicate mineral according to any one of claims 1 to 7.

14. Mastic comprising the ground phyllosilicate mineral according to any one of claims 1 to 7.

15. Ceramic comprising the ground phyllosilicate mineral according to any one of claims 1 to 7.

## Patentansprüche

1. Gemahlenes Schichtsilikatmineral, umfassend teilchenförmigen Talk mit einem d₅₀ im Bereich von 0,5 bis 10 µm und einem Formfaktor von 10 bis 100, worin der Formfaktor das Maß des Verhältnisses von Teilchendurchmesser zu Teilchendicke für eine Population mit unterschiedlicher Größe und Form ist, gemessen mit Hilfe der im US-Patent Nr. 5,576,617 beschriebenen elektrischen Leitfähigkeitsverfahren, -vorrichtungen und -gleichungen.

2. Gemahlenes Schichtsilikatmineral gemäß Anspruch 1, worin der Formfaktor im Bereich von 20 bis 70 ist.

3. Gemahlenes Schichtsilikatmineral gemäß Anspruch 1, worin der Formfaktor im Bereich von 30 bis 60 ist.

4. Gemahlenes Schichtsilikatmineral gemäß Anspruch 1, worin der d₅₀ im Bereich von 0,5 bis 6 µm ist.

5. Gemahlenes Schichtsilikatmineral gemäß Anspruch 1, worin der d₅₀ im Bereich von 1,0 bis 5 µm ist.

6. Gemahlenes Schichtsilikatmineral gemäß Anspruch 1, worin der d₅₀ im Bereich von 1,5 bis 4 µm ist.

7. Gemahlenes Schichtsilikatmineral gemäß Anspruch 1, worin der d₅₀ im Bereich von 1,0 bis 6,0 µm ist und der Formfaktor im Bereich von 20 bis 70 ist.

8. Verwendung eines gemahlenen Schichtsilikatminerals gemäß irgendeinem der Ansprüche 1 bis 7 als Beschichtungspigment oder als Füller, oder als Teil einer Beschichtungs- oder Füllzusammensetzung in der Herstellung von Papier, Pappe, Karton, Pappkarton, Schreibpapier, Druckerpapier, Polymeren, Gummis, Kunststoffen, Kunststofffilmen, Farben, Dichtungsmitteln, Mastixharzen oder Keramiken.

9. Zusammensetzung, umfassend das gemahlene Schichtsilikatmineral gemäß irgendeinem der Ansprüche 1 bis 7 zur Verwendung im Erhalten von Papier, Pappe, Karton, Pappkarton, Schreibpapier, Druckerpapier, Polymeren, Gummis, Kunststoffen, Kunststofffilmen, Farben, Dichtungsmitteln, Mastixharzen oder Keramiken.

10. Papier, umfassend das gemahlene Schichtsilikatmineral gemäß irgendeinem der Ansprüche 1 bis 7, worin das Papier irgendein Papier, Pappe, Karton oder Pappkarton ist, wie zum Beispiel Druckerpapier oder Schreibpapier.

11. Polymer oder Gummi, umfassend das gemahlene Schichtsilikatmineral gemäß irgendeinem der Ansprüche 1 bis 7, worin das Polymer oder Gummi Kunststoff sein kann, wie zum Beispiel ein Kunststofffilm.

12. Farbe, umfassend das gemahlene Schichtsilikatmineral gemäß irgendeinem der Ansprüche 1 bis 7.

13. Dichtungsmittel, umfassend das gemahlene Schichtsilikatmineral gemäß irgendeinem der Ansprüche 1 bis 7.

14. Mastixharz, umfassend das gemahlene Schichtsilikatmineral gemäß irgendeinem der Ansprüche 1 bis 7.

15. Keramik, umfassend das gemahlene Schichtsilikatmineral gemäß irgendeinem der Ansprüche 1 bis 7.

## Revendications

1. Minéral à base d'un phyllosilicate broyé comprenant du talc ayant un d₅₀ dans l'intervalle de 0,5 à 10 µm et un facteur de forme entre 10 et 100, dans lequel le facteur de forme est une mesure du rapport entre le diamètre de particule et l'épaisseur de particule pour une population de tailles et formes variées, mesuré en utilisant les méthodes, appareillages et équations de conductivité électrique décrits dans le brevet américain No. 5,576,617.

2. Minéral à base d'un phyllosilicate broyé selon la revendication 1, dans lequel le facteur de forme est dans l'intervalle entre 20 et 70.

3. Minéral à base d'un phyllosilicate broyé selon la revendication 1, dans lequel le facteur de forme est dans l'intervalle entre 30 et 60.

4. Minéral à base d'un phyllosilicate broyé selon la revendication 1, dans lequel le d₅₀ est dans l'intervalle entre 0,5 et 6 µm.

5. Minéral à base d'un phyllosilicate broyé selon la revendication 1, dans lequel le d₅₀ est dans l'intervalle entre 1,0 et 5 µm.

6. Minéral à base d'un phyllosilicate broyé selon la revendication 1, dans lequel le d₅₀ est dans l'intervalle entre 1,5 et 4 µm.

7. Minéral à base d'un phyllosilicate broyé selon la revendication 1, dans lequel le d₅₀ est dans l'intervalle entre 1,0 et 6,0 µm et le facteur de forme est dans l'intervalle entre 20 et 70.

8. Utilisation du minéral à base d'un phyllosilicate broyé selon une quelconque des revendications 1 à 7 comme pigment de couchage ou comme charge, ou comme partie d'une composition de couchage ou de charge dans la préparation de papier, de carte, de carton, de carton blanchi, de papier écriture, de papier d'impression, de polymères, de caoutchoucs, de plastiques, de films en plastique, de peintures, de produits d'étanchéité, de mastiques, ou de céramiques.

9. Composition comprenant le minéral à base d'un phyllosilicate broyé selon une quelconque des revendications 1 à 7 pour l'utilisation dans l'obtention de papier, de carte, de carton ou carton blanchi, de papier écriture, de papier d'impression, de polymères, de caoutchoucs, de plastiques, de films en plastique, de peintures, de produits d'étanchéité, de mastiques, ou de céramiques.

10. Papier comprenant le minéral à base d'un phyllosilicate broyé selon une quelconque des revendications 1 à 7, dans lequel le papier est quelconque papier, carte, carton ou carton blanchi, comme par exemple du papier écriture ou du papier d'impression.

11. Polymère ou caoutchouc comprenant le minéral à base d'un phyllosilicate broyé selon une quelconque des revendications 1 à 7, dans lequel le polymère ou le caoutchouc peut être un plastique, comme par exemple un film en plastique.

12. Peinture comprenant le minéral à base d'un phyllosilicate broyé selon une quelconque des revendications 1 à 7.

13. Produit d'étanchéité comprenant le minéral à base d'un phyllosilicate broyé selon une quelconque des revendications 1 à 7.

14. Mastique comprenant le minéral à base d'un phyllosilicate broyé selon une quelconque des revendications 1 à 7.

15. Céramique comprenant le minéral à base d'un phyllosilicate broyé selon une quelconque des revendications 1 à 7.
